# EUROPÄISCHE PATENTSCHRIFT

(11) **EP 4 158 762 B1**
(45) Veröffentlichungstag und Bekanntmachung des Hinweises auf die Patenterteilung: **19.02.2025**
(21) Anmeldenummer: 21726320.1
(22) Anmeldetag: 06.05.2021
(51) Int. Cl.: H02K 9/197

(54) **ELEKTRISCHE ROTATIONSMASCHINE UND ANTRIEBSANORDNUNG**
ELECTRIC ROTARY MACHINE AND DRIVE ARRANGEMENT
MACHINE TOURNANTE ÉLECTRIQUE ET SYSTÈME D'ENTRAÎNEMENT

(30) Priorität: 02.06.2020 DE 102020114604
(43) Veröffentlichungstag der Anmeldung: 05.04.2023
(73) Patentinhaber: Schaeffler Technologies AG & Co. KG, 91074 Herzogenaurach (DE)
(72) Erfinder: KNIEL, Jonas, 76137 Karlsruhe (DE); GRAMANN, Patrick, 77871 Renchen (DE)
(86) Internationale Anmeldenummer: PCT/DE2021/100411
(87) Internationale Veröffentlichungsnummer: WO 2021/244700

(56) Entgegenhaltungen:
- WO-A1-2019/201376
- DE-A1- 102007 033 457
- DE-A1- 102012 022 453
- US-B2- 8 348 727

## Beschreibung

Die Erfindung betrifft eine elektrische Rotationsmaschine sowie eine Antriebsanordnung für ein Kraftfahrzeug.

Aus dem Stand der Technik sind diverse elektrische Antriebseinrichtungen bekannt, die in Antriebsanordnungen für Kraftfahrzeuge eingesetzt werden. Derartige elektrische Antriebseinrichtungen umfassen in der Regel eine elektrische Rotationsmaschine mit einem um eine Rotationsachse drehbaren Rotor sowie einem bezüglich dem Rotor statisch angeordneten Stator und ein Gehäuse, in welchem die elektrische Rotationsmaschine angeordnet ist oder welches von der elektrischen Rotationsmaschine ausgebildet ist, zur Einhausung des Rotors. Dabei ist es bekannt, zum Zweck der Effizienzsteigerung eine Kühlung des Stators und/oder Rotors der elektrischen Rotationsmaschine vorzusehen.

Die DE 10 2015 015 797 A1 offenbart eine elektrische Maschine mit einem Rotor und einem Stator. Der Stator umfasst dabei zumindest eine Wicklung, die wenigstens eine dem Rotor zugewandte Fläche aufweist, welche mit einer von dem Rotor in radialer Richtung nach außen durch Drehen des Rotors abgesprühten Kühlflüssigkeit zum Kühlen der Wicklung beaufschlagbar ist.

In der EP 3 059 837 A1 wird ein Verfahren zur Oberflächenkühlung von zumindest einem Teil einer elektrischen Maschine sowie eine Kühlvorrichtung zur Durchführung des Verfahrens beschrieben. Die Kühlvorrichtung ist dazu vorgesehen, eine Hochdruckströmung und eine Niederdruckströmung auszubilden, zur Erzeugung eines Kühlmittelstroms. Die Kühlvorrichtung umfasst dazu eine Düse, welche die Hochdruckströmung erzeugt, wobei die Hochdruckströmung dafür vorgesehen ist, an einer zu kühlenden Oberfläche eines Rotors der elektrischen Maschine unter Nutzung des Coanda-Effekts zu verlaufen und eine Niederdruckströmung nach dem Injektionsprinzip mitzuführen.

Die WO 2016 132 060 A1 beschreibt eine elektrische Rotationsmaschine mit einem Stator mit einem Statorkörper sowie einen Verteilerkreis zur Aufnahme eines Kühlfluids zur Kühlung der elektrischen Rotationsmaschine.

Der Verteilerkreis ist dabei dazu ausgebildet, ein Kühlfluid in einen Innenraum der elektrischen Rotationsmaschine zu leiten, in welchem sich der Stator befindet. Der Verteilerkreis weist dazu genau eine Öffnung auf, welche einer Seitenfläche des Statorkörpers zugewandt ist, so dass das Kühlfluid direkt an den Statorkörper herangeführt werden kann.

Mit der JP 2016 149 900 A wird eine Kühlstruktur offenbart, welche eine elektrische Rotationsmaschine, einen Zirkulationspfad, einen Fluid-Tank, einen Rückführkanal sowie eine Ventileinrichtung umfasst.

Die elektrische Rotationsmaschine umfasst einen Rotor und einen Stator, wobei der Rotor in einer Rotorkammer angeordnet ist und der Stator in einer Statorkammer angeordnet ist und diese beiden Kammern durch eine Trennwand fluiddicht voneinander getrennt sind. Der Zirkulationspfad verbindet den Fluid-Tank mit der Statorkammer und auch der Rückführkanal verbindet den Fluid-Tank mit der Statorkammer, wobei die Ventileinrichtung zur Steuerung des Volumenstroms im Rückführkanal eingerichtet ist. Die Ventileinrichtung steuert dabei in Abhängigkeit des in der Statorkammer vorherrschenden Fluid-Drucks.

Die DE 10 2016 103 408 A1 lehrt einen Stator eines elektrischen Motors, umfassend einen Statorkern, eine Spule, welche um Zähne des Statorkerns gewickelt ist, einen Außenzylinder, welcher die Zähne an deren Joch umgibt, sowie ein wärmeleitendes Teil, welches mit einer inneren Umfangsfläche des Außenzylinders und einem Spulenende der Spule in Kontakt steht.

Durch diesen Aufbau wird ein Teil der Wärme, die während des Betriebs des Motors an den Spulen erzeugt wird, durch das wärmeleitende Teil zu dem Außenzylinder geleitet und von dem Außenzylinder an die Außenluft abgeleitet. Die Spule des Motors wird entsprechend über das wärmeleitende Teil gekühlt.

Die Druckschrift US 8 348 727 B2 offenbart einen Lüfter bzw. Ventilator für ein Elektrowerkzeug, insb. einen Winkelschleifer.

Eine besonders effiziente Kühlung der elektrischen Rotationsmaschine wird in der Regel durch eine Fluid-Kühlung erreicht. Dabei wird meist Öl als Kühlfluid genutzt, welches an den Rotor und/oder den Stator geleitet wird, um dort Wärme abzuführen. Üblicherweise wird das Öl dazu mittels einer von zwei Methoden an den Rotor und/oder den Stator geleitet. Dabei kann eine Verteileinrichtung mit einem rotierenden Bauteil verbunden sein und bei Rotation unter Nutzung von Fliehkraft das Öl an den Rotor und/oder den Stator schleudern.

Alternativ ist die Verteileinrichtung an einem feststehenden Bauteil angeordnet, um von dort düsenartig das Öl an den Rotor und/oder den Stator zu sprühen. Bei einer Ausgestaltung der Verteileinrichtung als Düse wird jedoch nur ein bestimmter Abschnitt am Umfang des Rotors und/oder Stators angesprüht, so dass entsprechend zur gleichmäßigen Kühlung des Stators mehrere Düsen am Umfang verteilt vorgesehen sein müssen.

Die Schleuderkühlung verteilt das Kühlöl bzw. Fluid jedoch nur vollumfänglich, solange das fluidführende Bauteil rotiert. Das bedeutet aber, dass im Stillstand des fluidführenden Bauteils das Fluid nicht weiter verteilt wird, sondern nur punktuell gekühlt wird, und es lokal an den nicht gekühlten Stellen zur Überhitzung kommen kann. Weiterhin ist die Auslegung der Fluidverteilung in dem rotierenden fluidführenden Bauteil in Abhängigkeit von der Drehzahl und dem herrschenden Fluiddruck aufwändig, insbesondere wenn mehrere Fluid-Ausgabeeinrichtungen vorgesehen sind, die strömungstechnisch miteinander verbunden sind.

Hiervon ausgehend liegt der vorliegenden Erfindung die Aufgabe zugrunde, eine elektrische Rotationsmaschine sowie eine damit ausgestattete Antriebsanordnung zur Verfügung zu stellen, die in konstruktiv einfacher und kostengünstiger Weise eine großflächige Kühlung der elektrischen Rotationsmaschine realisieren.

Die Aufgabe wird durch die erfindungsgemäße elektrische Rotationsmaschine nach Anspruch 1 gelöst. Vorteilhafte Ausgestaltungen der elektrischen Rotationsmaschine sind in den Unteransprüchen 2 bis 7 angegeben. Ergänzend wird eine Antriebsanordnung für ein Kraftfahrzeug, welche die elektrische Rotationsmaschine aufweist, gemäß Anspruch 8 zur Verfügung gestellt.

Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, die ergänzende Ausgestaltungen der Erfindung umfassen.

Die Begriffe "axial" und "radial" beziehen sich im Rahmen der vorliegenden Erfindung immer auf die Drehachse des Verteilelements.

Die Erfindung betrifft eine elektrische Rotationsmaschine mit einem um eine Rotationsachse drehbaren Rotor und einem bezüglich des Rotors statisch angeordneten Stator. Die elektrische Rotationsmaschine umfasst des Weiteren wenigstens eine statisch fest angeordnete Fluidzufuhreinrichtung und ein mit der Fluidzufuhreinrichtung strömungstechnisch verbundenes, relativ zur Fluidzufuhreinrichtung drehbares Verteilelement, das ein um seine Drehachse im Wesentlichen rotationssymmetrisches Bauteil ist. Die Fluidzufuhreinrichtung weist einen Strömungskanal mit einem Auslass zur Ausgabe eines Kühlfluid-Volumenstroms in einer Auslassrichtung auf. Eine Drehachse des Verteilelements ist derart in Bezug zum Auslass angeordnet, dass die Auslassrichtung tangential zu einem Umfang des Verteilelements verläuft, so dass das Verteilelement mit dem aus dem Auslass austretenden Kühlfluid-Volumenstrom tangential anströmbar ist und das Verteilelement durch die Anströmung in Rotation versetzbar ist, wodurch das Kühlfluid unter Mitnahme durch das Verteilelement um die Drehachse des Verteilelements herum verteilbar ist.

Derart lässt sich das Kühlfluid zu wenigstens einer Komponente der elektrischen Rotationsmaschine führen bzw. verteilen, insbesondere zu Wicklungen bzw. Wickelköpfen der Wicklungen des Stators.

Insbesondere ist vorgesehen, dass der Auslass im Wesentlichen senkrecht zur Rotationsachse des Rotors verläuft, und die Drehachse des Verteilelements parallel zur Rotationsachse des Rotors verläuft.

Dabei können der Auslass und das Verteilelement derart angeordnet und ausgebildet sein, dass der Kühlfluid-Volumenstrom auf einen Teil-Umfang des Verteilelements gerichtet ist. Das heißt, dass der Vektor des Kühlfluid-Volumenstroms nicht radial außen am Verteilelement angreift, sondern auf der axialen Fläche des Verteilelements, aber weiterhin nicht radial in Bezug auf die Drehachse des Verteilelements.

Insbesondere ist das Verteilelement eine Scheibe oder eine Hülse.

Dabei kann das Verteilelement an seinem Umfang wenigstens eine nach radial außen führende Öffnung aufweisen. Das heißt, dass in einer Ausführungsform des Verteilelements vorgesehen ist, dass von einem zentralen axialen Durchlass des Verteilelements sich eine Öffnung nach radial außen erstreckt, um eine fliehkraftbedingte Förderung des Kühlfluids zu begünstigen. Des Weiteren dient eine diese Öffnung begrenzende Kante oder Fläche als Mitnahmeelement bei der tangentialen Anströmung des Verteilelements, so dass dieses nicht nur reibungsbedingt in Rotation versetzbar ist, sondern auch durch den auf diese Kante bzw. Fläche wirkenden hydrodynamischen Druck.

Insbesondere kann eine solche nach radial außen führende Öffnung durch einen sich über die gesamte axiale Länge erstreckenden Schlitz in einem als Scheibe oder Hülse ausgeführten Verteilelement ausgebildet sein, oder auch als Bohrung in einem als Hülse ausgeführten Verteilelement ausgebildet sein.

Weiterhin kann das Verteilelement wenigstens ein Mitnahmeelement aufweisen, welches tangential von dem Kühlfluid-Volumenstrom anströmbar ist und somit auf Grund der Wirkung des hydrodynamischen Drucks des Kühlfluids eine tangential wirkende Kraft auf das Verteilelement aufnimmt. Ein solches Mitnahmeelement kann die bereits erwähnte Kante oder Fläche der nach radial außen führenden Öffnung sein, oder aber auch ein anderes oder weiteres Element, welches an einer dem Auslass zugewandten axialen Stirnseite des Verteilelements angeordnet ist, oder auch ein Element, welches in einem zentralen axialen Durchlass des Verteilelements angeordnet ist, und dort vom hydrodynamischen Druck des Kühlfluids beaufschlagt ist. Ein an dieser Position angeordnetes Mitnahmeelement kann insbesondere als eine in dem Verteilelement ausgebildete und sich im Wesentlichen achsparallel erstreckende Nut realisiert sein.

Die Fluidzufuhreinrichtung kann an dem Stator angeordnet sein oder von diesem ausgebildet sein. Alternativ ist die Fluidzufuhreinrichtung an einem Gehäuse der elektrischen Rotationsmaschine angeordnet oder von diesem ausgebildet.

Erfindungsgemäß ist der Strömungskanal zumindest abschnittsweise durch eine Längsbohrung einer in einem statisch fest angeordnetem Element der elektrischen Rotationsmaschine eingeschraubten Schraube ausgebildet, wobei der Auslass sich von der Längsbohrung erstreckend in der Schraube ausgebildet ist. Der Strömungskanal verläuft dabei insbesondere parallel zur Rotationsachse des Rotors. Das Verteilelement befindet sich in dieser Ausführungsform in axialer Richtung zwischen dem statisch fest angeordnetem Element und einem Schraubenkopf der Schraube mit seinem zentralen axialen Durchlass auf einem Schaft der Schraube, wobei zwischen dem statisch fest angeordnetem Element und dem Verteilelement einerseits sowie dem Verteilelement und dem Schraubenkopf andererseits ein ausreichendes axiales Spiel besteht, so dass das Verteilelement um den Schaft der Schraube herum rotieren kann.

Die elektrische Rotationsmaschine ist entsprechend derart ausgestaltet, dass eine drehzahlunabhängige und großflächige Kühlungsmöglichkeit für Komponenten der elektrischen Rotationsmaschine realisiert ist, die einfach auszulegen ist.

Alleine nur der Fluiddruck ist ausreichend, um die Verteilung des Fluids zu gewährleisten.

Des Weiteren wird erfindungsgemäß eine Antriebsanordnung für ein Kraftfahrzeug zur Verfügung gestellt, die eine erfindungsgemäße elektrische Rotationsmaschine sowie eine Abtriebseinrichtung aufweist. Die Abtriebseinrichtung kann insbesondere ein Getriebe sein, oder auch eine Verbrennungskraftmaschine.

Die Antriebsanordnung oder auch die elektrische Rotationsmaschine selbst umfasst eine Strömungserzeugungseinrichtung zur Erzeugung des Kühlfluid-Volumenstroms, die mit der Fluidzufuhreinrichtung strömungstechnisch gekoppelt ist, wobei die Strömungserzeugungseinrichtung derart ausgestaltet ist, dass am Auslass ein ausreichend großer Kühlfluid-Volumenstrom erzeugbar ist, der in der Lage ist, das Verteilelement in Rotation zu versetzen.

Durch die Rotation des Verteilelements wird das Kühlfluid um den Auslass der Fluidzufuhreinrichtung verteilt.

In einer Ausführungsform der elektrischen Rotationsmaschine ist vorgesehen, dass die elektrische Rotationsmaschine mehrere Fluidzufuhreinrichtungen und diesen zugeordnete Verteilelemente aufweist, insbesondere am Stator verteilt, zwecks Kühlungen von Wicklungen bzw. Wickelköpfen des Stators.

Die oben beschriebene Erfindung wird nachfolgend vor dem betreffenden technischen Hintergrund unter Bezugnahme auf die zugehörigen Zeichnungen, welche bevorzugte Ausgestaltungen zeigen, detailliert erläutert. Die Erfindung wird durch die rein schematischen Zeichnungen in keiner Weise beschränkt, wobei anzumerken ist, dass die in den Zeichnungen gezeigten Ausführungsbeispiele nicht auf die dargestellten Maße eingeschränkt sind. Es ist dargestellt in
- Figur 1:: eine erste Ausführungsform der Fluidzufuhreinrichtung mit daran angeordnetem Verteilelement in Schnittansicht;
- Figur 2:: die erste Ausführungsform der Fluidzufuhreinrichtung mit daran angeordnetem Verteilelement in geschnittener Explosionsdarstellung;
- Figur 3:: die erste Ausführungsform der Fluidzufuhreinrichtung mit daran angeordnetem Verteilelement in stirnseitiger Ansicht;
- Figur 4:: eine zweite Ausführungsform der Fluidzufuhreinrichtung mit daran angeordnetem Verteilelement in Schnittansicht;
- Figur 5:: die zweite Ausführungsform der Fluidzufuhreinrichtung mit daran angeordnetem Verteilelement in geschnittener Explosionsdarstellung;
- Figur 6:: die zweite Ausführungsform der Fluidzufuhreinrichtung mit daran angeordnetem Verteilelement in stirnseitiger Ansicht;
- Figur 7:: Einzelteile der zweiten Ausführungsform der Fluidzufuhreinrichtung in stirnseitiger Ansicht; und
- Figur 8:: Einzelteile der zweiten Ausführungsform der Fluidzufuhreinrichtung in stirnseitiger Ansicht.

In den Figuren ist die Fluidzufuhreinrichtung 10 mit daran angeordnetem Verteilelement in zwei unterschiedlichen Varianten dargestellt. Zunächst wird zur Erläuterung der Erfindung auf die den beiden Ausführungsformen gemeinsamen Elemente Bezug genommen.

Die elektrische Rotationsmaschine umfasst an einem statisch fest angeordneten Element 1, hier dem Stator, eine Fluidzufuhreinrichtung 10. Diese Fluidzufuhreinrichtung 10 bildet einen Strömungskanal 20 aus, durch den ein Kühlfluid in einem Volumenstrom strömen kann. In den hier dargestellten Ausführungsformen bildet dabei das statisch fest angeordnete Element 1 selbst einen ersten Abschnitt 21 des Strömungskanals 20 aus. Dieser erste Abschnitt 21 des Strömungskanals 20 umfasst ein Innengewinde 11, in dem mit einem entsprechend komplementären Außengewinde 31 eine Schraube 30 eingeschraubt ist. Die Schraube 30 weist eine Längsbohrung 32 auf, die einen zweiten Abschnitt 33 des Strömungskanals 20 ausbildet. Die Längsbohrung 32 mündet in einem Auslass 34, durch den der Kühlfluid-Volumenstrom 40 in einer Auslassrichtung 50 austreten kann.

Zwischen dem statisch fest angeordnetem Element 1 und einem Schraubenkopf 35 der Schraube 30 ist ein Verteilelement 60 drehbar um eine Drehachse 61 angeordnet, die in den dargestellten Ausführungsformen der Längsachse der Schraube 30 entspricht.

Der hydrodynamische Druck des in der Auslassrichtung 50 aus dem Auslass 34 austretenden Kühlfluid-Volumenstroms 40 führt auf Grund einer tangentialen Anströmung des Verteilelements 60 zu einer Rotation des Verteilelements 60. Auf Grund der dabei auf das Kühlfluid wirkenden Fliehkraft wird an dem Verteilelement 60 anhaftendes Kühlfluid von dem Verteilelement 60 abgeschleudert und um die Fluidzufuhreinrichtung 10 herum verteilt. Dadurch und insbesondere bei mehreren Fluidzufuhreinrichtungen 10 an oder in der elektrischen Rotationsmaschine wird eine großflächige und intensive Kühlung von Komponenten der elektrischen Rotationsmaschine gewährleistet.

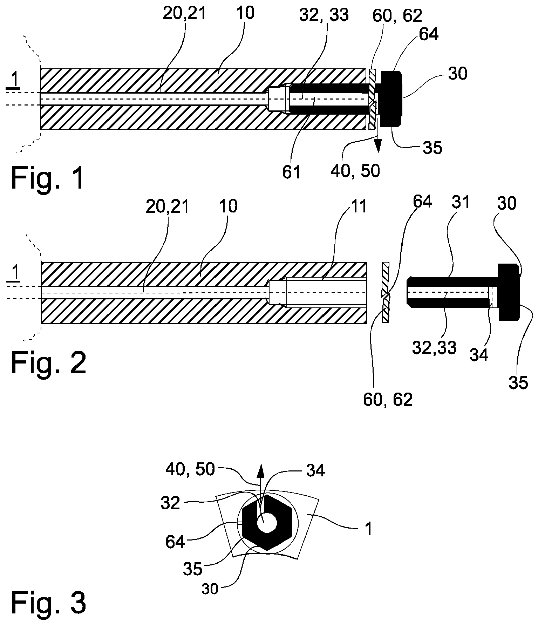

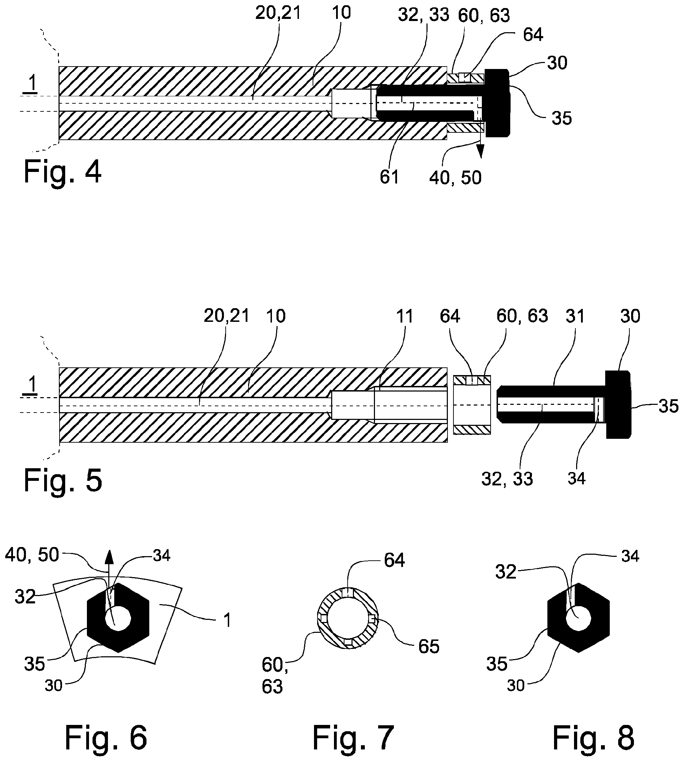

Die in den Figuren 1 bis 3 dargestellte Ausführungsform unterscheidet sich dabei von der in den Figuren 4 bis 8 dargestellten Ausführungsform darin, dass in der in den Figuren 1 bis 3 dargestellten Ausführungsform das Verteilelement 60 eine Scheibe ist, und die in den Figuren 4 bis 8 dargestellte Ausführungsform eine Hülse 63 ist.

Sowohl die Scheibe 62 als auch die Hülse 63 ist als ein im Wesentlichen rotationssymmetrisches Teil ausgebildet, welches mit einer zentralen Öffnung auf dem Schaft der Schraube 30 sitzt.

Die Scheibe 62 weist in der hier dargestellten Ausführungsform eine Öffnung 64 in Form eines radialen Schlitzes auf, der eine Führung des Kühlfluids nach radial außen bei der Drehbewegung der Scheibe 62 begünstigt.

Die Hülse 63 weist in der hier dargestellten Ausführungsform eine Öffnung 64 in Form einer Bohrung auf, die ebenfalls eine Führung des Kühlfluids nach radial außen bei der Drehbewegung der Hülse 63 begünstigt.

In der Hülse 63 sind des Weiteren an der radialen Innenseite verteilt mehrere Mitnahmeelemente 65 in Form von Nuten ausgebildet, zwecks Erleichterung der Drehbewegung der Hülse 63 bei Beaufschlagung mit dem hydrodynamischen Druck des Kühlfluids.

Das jeweilige Verteilelement 60 ist dabei mit einem axialen Spiel drehbar auf der Schraube 30 gelagert, so dass das das Verteilelement 60 tangential anströmende Kühlfluid an der Seite der Anströmung von dem Verteilelement 60 abgeschleudert werden kann.

Mit der erfindungsgemäßen elektrischen Rotationsmaschine sowie einer damit ausgestatteten Antriebsanordnung lässt sich in konstruktiv einfacher und kostengünstiger Weise eine großflächige Kühlung der elektrischen Rotationsmaschine realisieren.

### Bezugszeichenliste

- 1: statisch fest angeordnetes Element
- 10: Fluidzufuhreinrichtung
- 11: Innengewinde
- 20: Strömungskanal
- 21: Erster Abschnitt des Strömungskanals
- 30: Schraube
- 31: Außengewinde
- 32: Längsbohrung
- 33: Zweiter Abschnitt des Strömungskanals
- 34: Auslass
- 35: Schraubenkopf
- 40: Kühlfluid-Volumenstrom
- 50: Auslassrichtung
- 60: Verteilelement
- 61: Drehachse
- 62: Scheibe
- 63: Hülse
- 64: Öffnung
- 65: Mitnahmeelement

## Patentansprüche

1. Elektrische Rotationsmaschine mit einem um eine Rotationsachse drehbaren Rotor und einem bezüglich dem Rotor statisch angeordneten Stator, sowie wenigstens eine statisch fest angeordnete Fluidzufuhreinrichtung (10) und ein mit der Fluidzufuhreinrichtung (10) strömungstechnisch verbundenes, relativ zur Fluidzufuhreinrichtung (10) drehbares Verteilelement (60), das ein um seine Drehachse (61) im Wesentlichen rotationssymmetrisches Bauteil ist, wobei die Fluidzufuhreinrichtung (10) einen Strömungskanal (20) mit einem Auslass (34) zur Ausgabe eines Kühlfluid-Volumenstroms (40) in einer Auslassrichtung (50) aufweist, und eine Drehachse (61) des Verteilelements (60) derart in Bezug zum Auslass (34) angeordnet ist, dass die Auslassrichtung (50) tangential zu einem Umfang des Verteilelements (60) verläuft, so dass das Verteilelement (60) mit dem aus dem Auslass (34) austretenden Kühlfluid-Volumenstrom (40) tangential anströmbar ist und das Verteilelement (60) durch die Anströmung in Rotation versetzbar ist, wodurch das Kühlfluid unter Mitnahme durch das Verteilelement (60) um die Drehachse (61) des Verteilelements (60) herum verteilbar ist, wobei das Kühlfluid derart zu wenigstens einer Komponente der elektrischen Rotationsmaschine verteilt wird, und wobei der Strömungskanal (20) zumindest abschnittsweise durch eine Längsbohrung (32) einer in einem statisch fest angeordnetem Element (1) der elektrischen Rotationsmaschine eingeschraubten Schraube (30) ausgebildet ist, wobei der Auslass (34) sich von der Längsbohrung (32) erstreckend in der Schraube (30) ausgebildet ist.

2. Elektrische Rotationsmaschine nach Anspruch 1, **dadurch gekennzeichnet, dass** der Auslass (34) im Wesentlichen senkrecht zur Rotationsachse des Rotors verläuft, und die Drehachse (61) des Verteilelements (60) parallel zur Rotationsachse des Rotors verläuft.

3. Elektrische Rotationsmaschine nach einem der vorhergehenden Ansprüche, **dadurch gekennzeichnet, dass** der Auslass (34) und das Verteilelement (60) derart angeordnet und ausgebildet sind, dass der Kühlfluid-Volumenstrom (40) auf einen Teil-Umfang des Verteilelements (60) gerichtet ist.

4. Elektrische Rotationsmaschine nach einem der vorangehenden Ansprüche, **dadurch gekennzeichnet, dass** das Verteilelement (60) eine Scheibe (62) oder eine Hülse (63) ist.

5. Elektrische Rotationsmaschine nach einem der vorhergehenden Ansprüche, **dadurch gekennzeichnet, dass** das Verteilelement (60) an seinem Umfang wenigstens eine nach radial außen führende Öffnung (64) aufweist.

6. Elektrische Rotationsmaschine nach einem der vorhergehenden Ansprüche, **dadurch gekennzeichnet, dass** das Verteilelement (60) wenigstens ein Mitnahmeelement (65) aufweist, welches tangential von dem Kühlfluid-Volumenstrom (40) anströmbar ist und somit auf Grund der Wirkung des hydrodynamischen Drucks des Kühlfluids eine tangential wirkende Kraft auf das Verteilelement (60) aufnimmt.

7. Elektrische Rotationsmaschine nach einem der vorhergehenden Ansprüche, **dadurch gekennzeichnet, dass** die Fluidzufuhreinrichtung (10)
i) an dem Stator angeordnet ist oder von diesem ausgebildet ist, oder
ii) an einem Gehäuse der elektrischen Rotationsmaschine angeordnet ist oder von diesem ausgebildet ist.

8. Antriebsanordnung für ein Kraftfahrzeug mit einer elektrischen Rotationsmaschine gemäß einem der Ansprüche 1 bis 7 sowie mit einer Abtriebseinrichtung.

## Claims

1. An electric rotary machine comprising a rotor that is rotatable about an axis of rotation and a stator that is arranged statically with respect to the rotor, and at least one statically fixedly arranged fluid supply device (10) and a distributor element (60) that is connected to the fluid supply device (10) in a flow-conducting manner and can be rotated relative to the fluid supply device (10), said distributor element being a component that is substantially rotationally symmetrical about its axis of rotation (61), wherein the fluid supply device (10) comprises a flow channel (20) having an outlet (34) for dispensing a cooling fluid volume flow (40) in an outlet direction (50), and an axis of rotation (61) of the distributor element (60) is arranged in relation to the outlet (34) in such a way that the outlet direction (50) is tangential to a circumference of the distributor element (60), so that the distributor element (60) can be tangentially supplied with the cooling fluid volume flow (40) emerging from the outlet (34) and the distributor element (60) can be set in rotation by the incoming flow, whereby the cooling fluid can be distributed around the axis of rotation (61) of the distributor element (60) by the distributor element (60), wherein the cooling fluid is distributed as such to at least one component of the electric rotary machine, and wherein the flow channel (20) is formed at least in sections by a longitudinal bore (32) of a screw (30) screwed into a statically fixedly arranged element (1) of the electrical rotary machine, wherein the outlet (34) is formed in the screw (30) extending from the longitudinal bore (32).

2. The electric rotary machine according to claim 1, **characterized in that** the outlet (34) runs substantially perpendicular to the axis of rotation of the rotor, and the axis of rotation (61) of the distributor element (60) runs parallel to the axis of rotation of the rotor.

3. The electric rotary machine according to one of the preceding claims, **characterized in that** the outlet (34) and the distributor element (60) are arranged and designed such that the cooling fluid volume flow (40) is directed onto a partial circumference of the distributor element (60).

4. The electric rotary machine according to any one of the preceding claims, **characterized in that** the distributor element (60) is a disc (62) or a sleeve (63).

5. The electric rotary machine according to any one of the preceding claims, **characterized in that** the distributor element (60) has at least one opening (64) leading radially outward on its circumference.

6. The electric rotary machine according to any one of the preceding claims, **characterized in that** the distributor element (60) has at least one driving element (65), which can be tangentially flowed against by the cooling fluid volume flow (40) and thus absorbs a tangentially acting force on the distributor element (60) due to the effect of the hydrodynamic pressure of the cooling fluid.

7. The electric rotary machine according to any one of the preceding claims, **characterized in that** the fluid supply device (10)
i) is arranged on the stator or is formed thereby, or
ii) is arranged on a housing of the electric rotary machine or is formed thereby.

8. A drive arrangement for a motor vehicle having an electric rotary machine according to any one of claims 1 to 7 and having an output device.

## Revendications

1. Machine tournante électrique comportant un rotor pouvant tourner autour d'un axe de rotation et un stator monté statique par rapport au rotor, ainsi qu'au moins un dispositif d'alimentation en fluide (10) monté statique et fixe et un élément de distribution (60), relié fluidiquement au dispositif d'alimentation en fluide (10) et rotatif par rapport au dispositif d'alimentation en fluide (10), lequel élément de distribution est un composant essentiellement symétrique en rotation autour de son axe de rotation (61), le dispositif d'alimentation en fluide (10) présentant un canal d'écoulement (20) comportant une sortie (34) pour délivrer un débit volumique de fluide de refroidissement (40) dans une direction de sortie (50), et un axe de rotation (61) de l'élément de distribution (60) étant monté par rapport à la sortie ( 34) de telle sorte que la direction de sortie (50) s'étend tangentiellement à une circonférence de l'élément de distribution (60), de sorte que l'élément de distribution (60) peut être alimenté tangentiellement par le débit volumique de fluide de refroidissement (40) s'écoulant de la sortie (34) et l'élément de distribution (60) peut être mis en rotation par 'écoulement, grâce à quoi le fluide de refroidissement en étant entraîné par l'élément de distribution (60) peut être distribué autour de l'axe de rotation (61) de l'élément de distribution (60), le fluide de refroidissement étant ainsi distribué à au moins un composant de la machine tournante électrique, et le canal d'écoulement (20) étant formé au moins par sections par un alésage longitudinal (32) d'une vis (30) vissée dans un élément (1) monté statique et fixe de la machine rotative électrique, la sortie (34) étant formée dans la vis (30) s'étendant à partir de l'alésage longitudinal (32).

2. Machine tournante électrique selon la revendication 1, **caractérisée en ce que** la sortie (34) s'étend essentiellement perpendiculairement à l'axe de rotation du rotor, et l'axe de rotation (61) de l'élément de distribution (60) s'étend parallèlement à l'axe de rotation du rotor.

3. Machine tournante électrique selon l'une des revendications précédentes, **caractérisée en ce que** la sortie (34) et l'élément de distribution (60) sont montés et conçus de telle sorte que le débit volumique de fluide de refroidissement (40) est dirigé vers une circonférence partielle de l'élément de distribution (60).

4. Machine tournante électrique selon l'une des revendications précédentes, **caractérisée en ce que** l'élément de distribution (60) est un disque (62) ou un manchon (63).

5. Machine tournante électrique selon l'une des revendications précédentes, **caractérisée en ce que** l'élément de distribution (60) présente sur sa circonférence au moins une ouverture (64) menant radialement vers l'extérieur.

6. Machine tournante électrique selon l'une des revendications précédentes, **caractérisée en ce que** l'élément de distribution (60) présente au moins un élément d'entraînement (65) pouvant être alimenté tangentiellement par le débit volumétrique de fluide de refroidissement (40) et absorbant ainsi une force agissant tangentiellement sur l'élément de distribution (60) due à l'effet de la pression hydrodynamique du fluide de refroidissement.

7. Machine tournante électrique selon l'une des revendications précédentes, **caractérisé en ce que** le dispositif d'alimentation en fluide (10)
i) est monté sur le stator ou formé par celui-ci, ou
ii) est monté sur un boîtier de la machine tournante électrique ou formé par celui-ci.

8. Système d'entraînement pour un véhicule automobile comportant une machine tournante électrique selon l'une des revendications 1 à 7 et comportant un dispositif d'entraînement.
